# EUROPEAN PATENT APPLICATION

(11) **EP 2 484 811 A1**
(43) Date of publication of application: **08.08.2012**
(21) Application number: 11152997.0
(22) Date of filing: 02.02.2011
(51) Int. Cl.: C25B 1/08, C25B 15/08

(54) **System for producing a mixture of hydrogen and oxygen gases**

(71) Applicant: Hwang, Boo-Sung, Seoul (KR)
(72) Inventor: Hwang, Boo-Sung, Seoul (KR)
(74) Representative: Hocking, Adrian Niall

(57) **Abstract**

The system for producing hydrogen and oxygen mixture gases is disclosed, which comprises an electrode unit (20) which is formed of a plurality of negative electrodes (25) and a plurality of positive electrodes (26) and further includes first and second lines (21, 22) connected with a lower side of the electrolyte storage tank (10), and a third line (23) for supplying the produced hydrogen and oxygen mixture gases to the electrolyte storage tank (10); a mixture gas separation filter (50) which is installed in the interior of the electrolyte storage tank (10) for separating the hydrogen and oxygen mixture gases from the electrolyte; a collection part (60) which is formed in an upper side of the mixture gas separation filter (50) for collecting the hydrogen and oxygen mixture gases which are separated by means of the mixture gas separation filter (50); a first filter unit (70) which stores water for preventing the hydrogen and oxygen mixture gas, which is inputted from the collection part (60), reverse-flow into the collection part (60); and a first gas line (75) for connecting the collection part (60) and the first filter unit (70).

## Description

### TECHNICAL FIELD

The present invention relates to a system for producing a mixture of hydrogen and oxygen gases using water.

### BACKGROUND ART

The apparatus for generating a harmful mixture of hydrogen and oxygen is directed to generating a mixture of hydrogen and oxygen which are obtained based on an electrolysis and does not produce pollution and are not harmful in such a manner that water with a small amount of electrolyte to an electrolytic cell with positive and negative electrodes. At this time, the hydrogen and oxygen are produced at a mole ratio of 2:1, the hydrogen produced in a bubble shape at the surface of the negative electrode, the oxygen produced in a bubble shape at the surface of the positive electrode. The thusly produced hydrogen and oxygen are mixed in a mixed gas form, which can burn. During the combustion, since the mixture of hydrogen and oxygen does not produce pollutants, it is very environment friendly and can be recognized as a new energy source.

However, since the amount of hydrogen and oxygen as compared to the electric power used for generating the same and applied to the positive and negative electrodes, it is disadvantageously needed to add a certain auxiliary gas such as propane gas to the mixture of hydrogen and oxygen, which leads to a bad production efficiency.

Since oxygen is contained in a mixture of hydrogen and oxygen gases, combustion can be performed without supplying external oxygen. So, the combustion flames produced in the course of combustion can reverse burn, which leads to a big problem.

### DISCLOSURE OF THE INVENTION

Accordingly, it is an object of the present invention to provide a system for producing a mixture of hydrogen and oxygen gases which can obtain economical advantages by increasing the amount of a mixture of hydrogen and oxygen gases as compared to an electric energy and at the same time combustion can be performed without an auxiliary gas such as propane.

It is another object of the present invention to provide a system for producing a mixture of hydrogen and oxygen gases which can secure a stable structure by eliminating a reverse combustion flame possibility.

To achieve the above objects, there is provided a system for producing hydrogen and oxygen mixture gases, which comprises an electrode unit 20 which is formed of a plurality of negative electrodes 25 and a plurality of positive electrodes 26 and further includes first and second lines 21 and 22 connected with a lower side of the electrolyte storage tank 10, and a third line 23 for supplying the produced hydrogen and oxygen mixture gases to the electrolyte storage tank 10; a mixture gas separation filter 50 which is installed in the interior of the electrolyte storage tank 10 for separating the hydrogen and oxygen mixture gases from the electrolyte; a collection part 60 which is formed in an upper side of the mixture gas separation filter 50 for collecting the hydrogen and oxygen mixture gases which are separated by means of the mixture gas separation filter 50; a first filter unit 70 which stores water for preventing the hydrogen and oxygen mixture gas, which is inputted from the collection part 60, reverse-flow into the collection part 60; and a first gas line 75 for connecting the collection part 60 and the first filter unit 70.

The third line 23 is positioned in the upper sides of the first and second lines 21 and 22, and a mixture gas input prevention plate 40 is installed between the first and second lines 21 and 22 and the third line 23 for preventing the hydrogen and oxygen mixture gases, which are inputted through the third line 23, from being inputted into the first and second lines 21 and 22.

There are further provided a circulation pump 30 which is connected with the first line 21 or the second line 22 for circulating the electrolyte between the electrolyte storage tank 10 and the electrode unit 20, and a nano particle formation part 35 which is installed in the firs line 21 or the second line 22 for dividing the particles of the electrolyte, which are transferred to the electrode unit 20 by means of the circulation pump 30, into small parts while providing the same with fine pressure changes.

The first filter unit 70 comprises a water storing part 71 connected with the first gas line 75 for storing water therein, a first catalyst storing part 72 installed in an upper side of the water storing part 71 for storing catalyst, and a first Venturi part 73 for connecting the water storing part 71 and the first catalyst storing part 72. There is further provided a first foreign substance removing filter 76 which is connected with an end of the first gas line 75 disposed in the interior of the water storing part 71.

There are further provided a second filter unit 80 which stores a certain organic agent therein for enhancing the purity of hydrogen and oxygen mixture gases inputted from the first filter unit 70 and preventing the same from being reverse-flown into the first filter unit 70, and a second gas line 85 connected with the first filter unit 70. The second filter unit 80 includes an organic agent storing part 81 which stores a certain organic agent therein and is connected with the second gas line 85, a second catalyst storing part 82 installed in an upper side of the organic agent storing part 81 for storing catalyst, and a second Venturi part 83 for connecting the organic agent storing part 81 and the second catalyst storing part 82. There is further provided a second foreign substance removing filter 86 which is connected with an end of the second gas line 85 disposed in the interior of the organic agent storing part 81.

The surfaces of the negative and positive electrodes 25 and 26 are nano-polished for an efficient electrolysis and an easier detachment of the bubbles of produced hydrogen and oxygen gases. The tourmaline photo catalyst is attached to the surfaces of the negative and positive electrodes 25 and 26.

The nano particle formation part 35 includes a body 36 installed in the first line 21, an impeller 37 installed in the interior of the body 36 formed at an inclined angle for thereby being rotated by means of the transferred electrolyte, and a bearing 38 or a bushing which supports the axis of the impeller 37, and the impeller 37 is configured as getting wider in the direction of the electrode unit 20.

The mixture gas input prevention plate 40 is implemented as tourmaline photo catalyst is formed in a plate material with holes or in a mesh type plate member.

The mixture gas separation filter 50 is formed in a mesh type and is implemented along with photo catalyst.

### EFFECTS

In the system for producing a mixture of hydrogen and oxygen gases according to the present invention, nano particles are divided into negative electrodes and positive electrodes which produce hydrogen and oxygen bubbles, and water having very low vibrations is supplied for thereby more effectively producing hydrogen and oxygen bubbles from electrodes, and effectively detach the produced bubbles. So, it is possible to enhance electrolyte efficiency, which can increase the amount of a mixture of hydrogen and oxygen gases as compared to the electric energy inputted, for thereby obtaining economical advantages, and combustion can be performed without using an auxiliary fuel.

In addition, reverse burning of combustion flame can be prevented by adapting the first and second filter units, and a high purity gas mixture can be produced for thereby implementing a more stable hydrogen and oxygen gas mixture production system.

### BRIEF DESCRIPTION OF THE DRAWINGS

The present invention will become better understood with reference to the accompanying drawings which are given only by way of illustration and thus are not limitative of the present invention, wherein;
Figure 1 is a view for describing the construction of a system for producing hydrogen and oxygen mixture gases according to the present invention; and
Figure 2 is a view of a nano particle formation part of Figure 1.

### MODES FOR CARRYING OUT THE INVENTION

The system for producing a mixture of hydrogen and oxygen gases according to the present invention will be described with reference to the accompanying drawings.

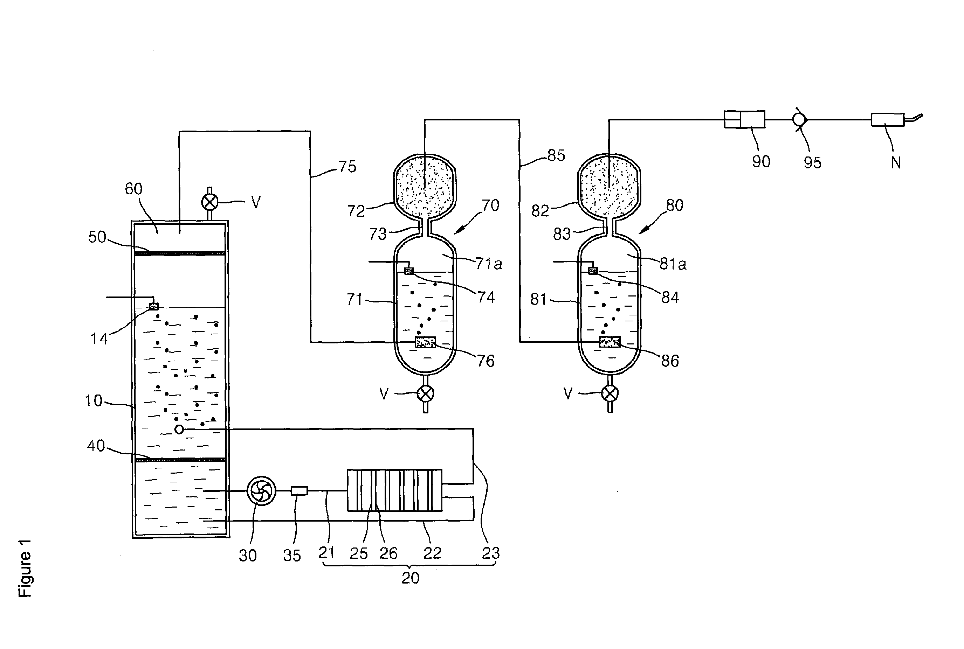

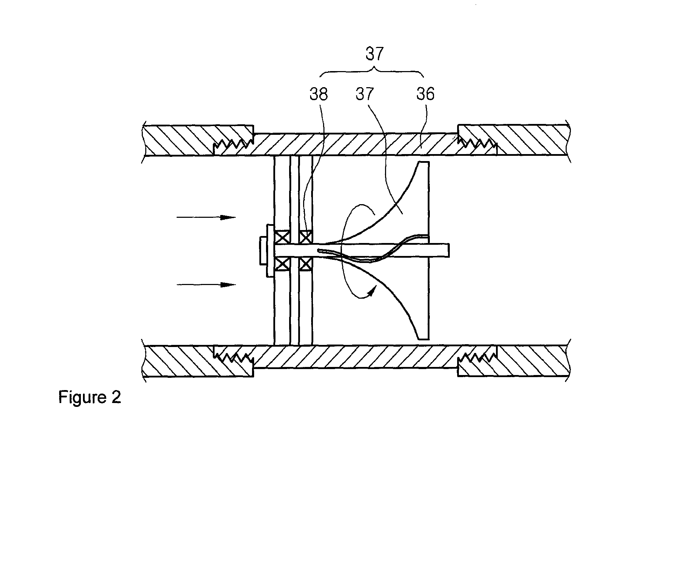

Figure 1 is a view for describing the construction of a system for producing a mixture of hydrogen and oxygen gases according to the present invention, and Figure 2 is a view illustrating a nano particle formation part of Figure 1.

As shown therein, the system for producing a mixture of hydrogen and oxygen gases according to the present invention comprises an electrolyte storage tank 10 for storing electrolyte as electrolysis is performed with respect to water; an electrode unit 20 which is formed of pluralities of positive electrodes 25 and negative electrodes 26 and includes first and second lines 21 and 22 connected with a lower side of the electrolyte storage tank 10, and a third line 23 for supplying a mixture of hydrogen and oxygen gases to the electrolyte storage tank 10; a circulation pump 30 which is connected with the first line 21 or the second line 22 for thereby circulating electrolyte between the electrolyte storage tank 10 and the electrode unit 20; a mixture gas input prevention plate 40 which is installed between the portion connected with the first and second lines 21 and 22 and the portion connected with the third line 23 in the interior of the electrolyte storage tank 20 for preventing the mixture of hydrogen and oxygen gases, which is inputted through the third line 23, from being inputted into the first and second lines 21; a mixed gas separation filter 50 for separating the hydrogen and oxygen mixed gas from the electrolyte; a collection part 60 which is formed on an upper side of the mixed gas separation filter 50 for thereby collecting the hydrogen and oxygen mixed gases which are separated by means of the mixed gas separation filter 50; a first filter unit 70 for storing water therein for preventing the hydrogen and oxygen gas mixture, which is inputted from the collection part 60, from being reverse inputted into the collection part 60; a first gas line 75 connected with the collection part 60 and the first filter unit 70; a second filter unit 80 which enhances the purity of the hydrogen and oxygen gas mixture inputted from the first filter unit 70 and stores organic agent for preventing a reverse input into the first filter unit 70; a second gas line 85 for connecting the fist and second filter units 70 and 80. a reverse flame prevention part 90 for preventing combustion flame from being reverse inputted into the second filter unit 80 when the hydrogen and oxygen gas mixture inputted from the second filter unit 80 is burned; and a nozzle N connected with the reverse flame prevention part 90 for spraying hydrogen and oxygen gas mixture.

A water level detection part 14 is installed in the interior of the electrolyte storage tank 10 for detecting the water level of the electrolyte. The water level detection part 14 measures the amount of electrolyte consumed in the electrolyte storage tank 10 and allows the water to be supplied from the water supply tank(not shown) to the electrolyte storage tank 10. Here, the water level detection part 14 can be implemented in various forms. For example, it could be implemented in a float method or a sensor method. The water level detection part 14 and the water supply tank are known in the field, so their descriptions will be omitted.

A valve V is installed in a lower side or an upper side of the electrolyte storage tank 10 for filling water.

The electrode unit 20 is provided for producing hydrogen and oxygen gases by hydrolysis-treating water and includes a plurality of negative electrodes 25 and a plurality of positive electrodes 26. The surfaces of the negative and positive electrodes 25 and 26 are nano polished for efficient electrolysis occurrence.

Here, the nano polishing process is to nano polish the surfaces of the negative and positive electrodes 25 and 26. The friction forces of the surfaces of the negative and positive electrodes 25 and 26 can be minimized with the helps of nano polishing, so that the produced oxygen and oxygen bubbles can be easily detached. In particular, when the sizes of the substance change to nano sizes in a bulk state, mechanical, electrical, magnetic and optical properties change. The electrolysis of water can be more efficiently performed by nano polishing the negative and positive electrodes 25 and 26 and by changing physical properties.

Tourmaline photo catalyst could be attached to the surfaces of the negative and positive electrodes 25 and 26. The tourmaline photo catalyst is plasticity-formed at a temperature of about 1300°C after tourmaline photo catalyst is ground from a few micron sizes to a few nano meter sizes. The tourmaline photo catalyst can be attached to the negative and positive electrodes 25 and 26 using a certain adhesive. Tourmaline is a mineral which has a hexagonal crystal structure, which produces electricity by means of a friction and produces a lot of anion. Lots of hydrogen and oxygen gases can be produced by promoting electrolysis. Tourmaline is ground to powder and is plasticity-formed as photo catalyst having enormous micro pores which help increase the contact area with the electrolyte. Namely, it is possible to promote the electrolysis of electrolyte by attaching tourmaline photo catalyst to the negative and positive electrodes 25 and 26.

It is obvious that the negative and positive electrodes can be implemented by molding the tourmaline photo catalyst in a sheet shape.

The negative and positive electrodes are positioned in the interior of the box sealed.

The circulation pump 30 is installed in the first line 21 or the second line 22 and allows the electrolyte to circulate between the electrolyte storage tank 10 and the electrode unit 20. In the present invention, it is described that the circulation pump 30 is installed in the first line 21, and the electrolyte is transferred to the electrode unit 20 through the first line 21.

A nano particle formation part 35 could be installed in the first line 21 or the second line 22 for splitting the particle of the electrode, into small parts, transferred to the electrode unit 20 by means of the circulation pump 30 while causing small pressure change. In the present invention, it is described that the nano particle formation part 35 is installed in the first line 21. For the above structure, the nano particle formation part 35 comprises a body 36 which is installed in the first line 21, an impeller 37 which is installed in the interior of the body 36 at an inclined angle for rotations by means of the electrolyte, and a bearing 38 or a bushing which supports the shafts of the impeller 37. At this time, the impeller 37 is configured as having widened in the direction of the electrode unit 20. The electrolyte transferred by means of the circulation pump 30 rotates the impeller 37, and the impeller 37 divides the electrolyte into small parts while vibrating the same. Since the impeller 37 is configured as having widened in the direction of the electrode unit 20, it is possible for the impeller 37 to divide smaller parts while vibrating the same when passing through the widening portions of the impeller 37. The divided and vibrating electrolyte is inputted into the electrode unit 20, so electrolysis can occur more efficiently with the helps of the negative electrode 25 and the positive electrode 26.

In addition, the electrolyte vibrated by means of the nano particle formation part 35 impacts the bubbles of the hydrogen and oxygen gases formed on the surface of the negative and positive electrodes 25 and 26 for thereby more efficiently detaching the bubbles.

The hydrogen and oxygen gas mixture of the present invention might be made smaller without adapting the circulation pump 30. When the hydrogen and oxygen gas bubbles generated from the electrode unit 20 are inputted into the electrolyte storage tank 10, since the pressure of the interior of the electrolyte storage tank 10 increases, the electrolyte can naturally circulate through the first and second lines 21 and 22. When the circulation pump 30 is applied, since the electrolyte is forcibly circulated, the electrolyte efficiency can be enhanced.

The mixture gas input prevention plate 40 is provided so as to prevent the hydrogen and oxygen gas bubbles, which are inputted through the third line 23, from moving in the direction of the first and second lines 21 and 22, for which the mixture gas input prevention plate 40 is formed of a plate material with holes or a mesh-shaped plate material.

The mixture gas input prevention plate 40 might be implemented as tourmaline photo catalyst is attached to a plate material with holes or a mesh shaped plate material. The tourmaline photo catalyst might be implemented in such a manner that tourmaline is ground into powder from a few micro sizes to a few nano meters and is plasticity-formed at a temperature of about 1300°C. Here the tourmaline is a mineral having a hexagonal crystal structure like a crystal. When surrounding temperature increases, it produces a lot of anion, which promotes electrolysis of electrolyte. Since the tourmaline is ground into powder and is plasticity-formed, enormous micro pores are formed in the photo catalyst, which leads to increase the contact area with electrolyte. It is possible to promote the electrolysis of electrolyte by attaching the tourmaline catalyst to the plate material of the mixture gas input prevention plate. In particular, the temperature of water increases to about 80∼90° in the course of electrolysis, so the tourmaline photo catalyst produces a lot of anion, whereby the electrolysis can be promoted more.

The mixture gas separation filter 50 separates the hydrogen and oxygen gases generated from the electrode unit 20 from the electrolyte for thereby collecting only the pure hydrogen and oxygen mixture gases in the collection part 60. It is preferred that in the mixture gas separation filter 50, the mesh net is equipped with photo catalyst or preferably tourmaline catalyst. The tourmaline photo catalyst might be implemented as the photo catalyst is coated on a mesh net or it is originally contained in the mesh net when it is manufactured. The mixture gas separation filter 50 is able to filter foreign substances contained in the interior of the mixture of rising hydrogen and oxygen gases, namely, foreign substances generating from the negative and positive electrodes or foreign substance contained in the water supplied, for thereby collecting only the mixture of pure hydrogen and oxygen gases. In particular, since photo catalyst is formed in the mixture gas separation filter 50, the foreign substances can be more effectively removed with the help of the photo catalyst operation.

The collection part 60 is like a space formed in the upper side of the mixture gas separation filter 50 for collecting the mixture gases separated by means of the mixture gas separation filter 50.

The first filter unit 70 is configured to remove the hydrogen and oxygen gases inputted from the collection part 60 to the first gas line 75 for thereby producing a high purity mixture gas. In addition, it has a reverse flame prevention function for preventing the hydrogen and oxygen mixture gas from being reverse-inputted into the collection part 60. The first filter unit 70 comprises a water storing part 71 which is connected with the first gas line 75 for storing water therein, a first catalyst storing part 72 installed in an upper side of the water storing part 71 for storing catalyst, and a first Venturi part 73 for connecting the water storing part 71 and the first catalyst party 72.

In the water storing part 71, a first sub-collection part 71 a is formed above the water of the same for collecting hydrogen and oxygen gas mixture which has passed through the water.

Catalyst generally is stored in the first catalyst storing part 72. Catalyst is like tourmaline photo catalyst or platinum catalyst. The first catalyst storing part 72 removes a compound-type foreign substance with the helps of catalyst operation.

The Venturi part 73 is basically adapted to uniformly mix the hydrogen gas and the oxygen gas which pass through the same, while preventing the mixed gases, which has moved to the first catalyst storing part 72, from being reverse-inputted into the first sub-collection part 71 a, for which operation at least one or two fine flow paths are formed in the interior of the first Venturi part 73. More preferably, fine flow paths are formed in a screw shape. The diameter of the path formed in the first Venturi part 73 preferably is in a range of 0.2mm through 10mm.

Actually, the hydrogen and oxygen gases, which are inputted into the water storing part 71, might be partially not mixed. However the hydrogen and oxygen gases can naturally and uniformly mixed while passing through the flow path of the first Venturi part 73.

A water level detection part 74 is installed in the interior of the water storing part 71 for detecting the level of water. The water level detection part 74 measures the amount of water consumed in the water storing part 71 for thereby reliably supplying water from the water supply tank(not shown) to the water storing part 71. The water level detection part 74 can be applied in various types. For example, it might be applied in a float method or a sensor type. Since the water level detection part 74 and the water supply tank are known in the field, their descriptions will be omitted.

A first foreign substance removing filter 76 might be connected at the end of the first gas line 75 positioned in the interior of the water storing part 71. The first foreign substance removing filter 76 is configured to remove the foreign substances contained in the hydrogen and oxygen gas mixture.

With the helps of the structure of the first filter unit 70, the foreign substances contained in the hydrogen and oxygen mixture gases, which are inputted through the first gas line 75, are removed by means of the first foreign substance removing filter 76. The foreign substance-removed mixture gas moves up and is connected in the first sub-collection part 71 a, so the gas does not reverse-flow to the first gas line 75. The mixture gas collected in the first sub-collection part 71 a is more uniformly mixed while passing through the first Venturi part 73, and the compound foreign substances are removed while passing through the first catalyst storing unit 72, so high purity mixture gas can be obtained.

The second filter unit 80 removes again the foreign substances from the hydrogen and oxygen gas inputted from the first filter unit 70 through the second gas line 85 for thereby producing high purity mixture gas while performing a reverse flame prevention function which prevents a reverse flow into the first filter unit 70, for which the second filter unit 80 comprises an organic agent storing part 81 connected with the second gas line 85 for storing an organic agent therein, a second catalyst storing part 82installed in an upper side of the organic agent storing part 81 for storing catalyst, and a second Venturi part 83 for connecting the organic agent part 81 and the second catalyst storing part 82.

In the organic agent storing part 81, a second sub-collection part 81 a is formed in the upper side of the organic agent for collecting hydrogen and oxygen mixture gases which have passed through the organic agent.

Catalyst is stored in the second catalyst storing part 82, and catalyst is formed of tourmaline photo catalyst or platinum catalyst. The second catalyst storing part 82 removes compound type foreign substances with the helps of catalyst operation.

The second Venturi part 83 is applied for forming mixed gas by uniformly mixing hydrogen gas and oxygen gas while preventing the mixed gas, which has moved to the second catalyst storing part 82, from being reverse-inputted into the second sub-collection part 81 a, for which operation at least one or two flow paths are formed in the interior of the second Venturi part 83. More preferably, fine flow paths are formed in a screw shape. It is preferred that the diameter of the flow path formed in the second Venturi part 83 is in a range of 0.2mm through 10mm.

The hydrogen gas and oxygen gas inputted into the organic agent storing part 81 after passing through the first filter unit 70 might not be still mixed partially, however they are more uniformly mixed while passing through the flow path of the second Venturi part 83.

The water level detection part 84 is installed in the interior of the organic agent storing part 81 for detecting the level of organic agent. The water level storing part 81 measures the amount of organic agent consumed, and allows the organic agent to be supplied from the organic agent supply tank(not shown) to the organic agent storing part 81. Here the water level detection part 84 might be implemented in various types. For example, it might be implemented in a float type or a sensor type. Since the above water level detection part 84 and organic agent supply tank are well known in the field, the descriptions of the same will be omitted.

With the helps of the second filter unit 80, the foreign substances contained in the hydrogen and oxygen gas, which is inputted through the second gas line 85, is removed by means of the second foreign substance filter 86. The foreign substance-removed mixture gas moves up and is collected in the second sub-collection part 81 a, so it does not reverse-flow into the second gas line 85. The mixed gases collected in the second sub-collection part 81a are more uniformly mixed while passing through the second Venturi part 83, and the compound type foreign substance is removed while passing through the second catalyst storing part 82, so a high purity mixed gas is obtained.

The organic agent is used for an easier ignition of the mixture gas which passes through the organic agent. It is possible to change the colors of flames by changing the kinds of organic agents. The quality of gas can be improved by lowering the ignition temperature for an easier ignition of the hydrogen and oxygen mixture gas. It is possible to generate a certain smell for checking when the leakage of hydrogen and oxygen mixture gas by adding a certain additive. In order words, the organic agent is applied to ease the ignition of the hydrogen and oxygen mixture gas. Here the organic agent might be formed of alcohol which has a lower ignition temperature and is widely known.

The reverse flame prevention part 90 prevents a reverse flow of the hydrogen and oxygen mixture gas, which has been discharged from the second filter unit 80, into the second filter unit 80, for thereby preventing the combustion flame from flowing into the second filter unit 80 in the burning course of hydrogen and oxygen mixture gases. The reverse flame prevention part 90 is a safety apparatus of the system for producing hydrogen and oxygen gases according to the present invention. Since the reverse flame prevention part 90 is well known in the art, the descriptions of the same will be omitted.

A check valve 95 is installed between the reverse flame prevention part 90 and the nozzle N for finally preventing the reverse flame. The check valve 95 allows the gas to flow only from the reverse flame prevention part 90 to the nozzle N and is formed of a spring for applying an elastic force only in the direction of the nozzle N, and a ball which is elastically biased by means of the spring for selectively opening and closing the entrance of the nozzle N direction. Since the check valve 95 is well known in the field, the descriptions of the same will be omitted.

With the above structure of the present invention, when DC electric energy is applied to the electrode unit 20, electrolysis occurs between the negative electrode 25 and the positive electrode 26, so hydrogen and oxygen bubbles occur, and the gases are mixed and are inputted into the interior of the electrolyte storage tank 10 through the third line 23. At this time, the mixture gas input prevention plate 40 prevents the hydrogen and oxygen gas bubbles from being moved into the first line 21 through the third line 23.

The hydrogen and oxygen mixture gases are collected into the collection part 60 through the mixture gas separation filter 50. At this time, the mixture gas separation filter 50 separates the hydrogen and oxygen mixture gas from the electrolyte for thereby collecting only pure hydrogen and oxygen mixture gases.

The hydrogen and oxygen mixture gases collected in the collection part 60 passes through the first gas line 75 -> the first filter unit 70 -> the second gas line 85 -> the second filter unit 80 and then the reverse flame prevention part 90 -> the check valve 95 -> the nozzle N and is used as a combustion gas.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A system for producing hydrogen and oxygen mixture gases, comprising:
an electrode unit (20) which is formed of a plurality of negative electrodes (25) and a plurality of positive electrodes (26) and further includes first and second lines (21, 22) connected with a lower side of the electrolyte storage tank (10), and a third line (23) for supplying the produced hydrogen and oxygen mixture gases to the electrolyte storage tank (10);
a mixture gas separation filter (50) which is installed in the interior of the electrolyte storage tank (10) for separating the hydrogen and oxygen mixture gases from the electrolyte;
a collection part (60) which is formed in an upper side of the mixture gas separation filter (50) for collecting the hydrogen and oxygen mixture gases which are separated by means of the mixture gas separation filter (50);
a first filter unit (70) which stores water for preventing the hydrogen and oxygen mixture gas, which is inputted from the collection part (60), reverse-flow into the collection part (60); and
a first gas line (75) for connecting the collection part (60) and the first filter unit (70).

2. The system of claim 1, wherein said third line (23) is positioned in the upper sides of the first and second lines (21, 22), and a mixture gas input prevention plate (40) is installed between the first and second lines (21, 22) and the third line (23) for preventing the hydrogen and oxygen mixture gases, which are inputted through the third line (23), from being inputted into the first and second lines (21, 22).

3. The system of claim 1, further comprising a circulation pump (30) which is connected with the first line (21) or the second line (22) for circulating the electrolyte between the electrolyte storage tank (10) and the electrode unit (20), and a nano particle formation part (35) which is installed in the first line (21) or the second line (22) for dividing the particles of the electrolyte, which are transferred to the electrode unit (20) by means of the circulation pump (30), into small parts while providing the same with fine pressure changes.

4. The system of claim 1, wherein said first filter unit (70) comprises a water storing part (71) connected with the first gas line (75) for storing water therein, a first catalyst storing part (72) installed in an upper side of the water storing part (71) for storing catalyst, and a first Venturi part (73) for connecting the water storing part (71) and the first catalyst storing part (72).

5. The system of claim 4, further comprising a first foreign substance removing filter (76) which is connected with an end of the first gas line (75) disposed in the interior of the water storing part (71).

6. The system of claim 1, further comprising a second filter unit (80) which stores a certain organic agent therein for enhancing the purity of hydrogen and oxygen mixture gases inputted from the first filter unit (70) and preventing the same from being reverse-flown into the first filter unit (70), and a second gas line (85) connected with the first filter unit (70).

7. The system of claim 6, wherein said second filter unit (80) includes an organic agent storing part (81) which stores a certain organic agent therein and is connected with the second gas line (85), a second catalyst storing part (82) installed in an upper side of the organic agent storing part (81) for storing catalyst, and a second Venturi part (83) for connecting the organic agent storing part (81) and the second catalyst storing part (82).

8. The system of claim 7, further comprising a second foreign substance removing filter (86) which is connected with an end of the second gas line (85) disposed in the interior of the organic agent storing part (81).

9. The system of claim 1, wherein the surfaces of said negative and positive electrodes (25, 26) are nano-polished for an efficient electrolysis and an easier detachment of the bubbles of produced hydrogen and oxygen gases.

10. The system of claim 1, wherein tourmaline photo catalyst is attached to the surfaces of the negative and positive electrodes (25, 26).

11. The system of claim 1, wherein said nano particle formation part (35) includes a body (36) installed in the first line (21), an impeller (37) installed in the interior of the body (36) formed at an inclined angle for thereby being rotated by means of the transferred electrolyte, and a bearing (38) or a bushing which supports the axis of the impeller (37), and said impeller (37) is configured as getting wider in the direction of the electrode unit (20).

12. The system of claim 1, wherein said mixture gas input prevention plate (40) is implemented as tourmaline photo catalyst is formed in a plate material with holes or in a mesh type plate member.

13. The system of claim 1, wherein said mixture gas separation filter (50) is formed in a mesh type and is implemented along with photo catalyst.
